# EUROPÄISCHE PATENTANMELDUNG

(11) **EP 1 894 710 A1**
(43) Veröffentlichungstag der Anmeldung: **05.03.2008**
(21) Anmeldenummer: 07115079.1
(22) Anmeldetag: 28.08.2007
(51) Int. Cl.: B31F 1/00, B31F 1/28, C09J 103/00, C09J 103/02

(54) **Verfahren zur Herstellung von Wellpappenkleber**

(30) Priorität: 28.08.2006 DE 102006040189
(71) Anmelder: BVG Bauer Verfahrenstechnik GmbH, 89626 Greifenberg (DE)
(72) Erfinder: Bauer, Jochen, Dr., 86926 Pflaumendorf (DE)
(74) Vertreter: Leske, Thomas

(57) **Zusammenfassung**

Es wird ein Verfahren zur Herstellung von Wellen- oder Kaschierleimen, insbesondere nach dem VCC- Verfahren, beschrieben, wobei Aufbereitungsmodulen für Wellen- oder Kaschierleim, die unmittelbar neben Wellen- oder Kaschierwerken einer Wellpappenanlage angeordnet sind, kontinuierlich Stärkesuspension zugeführt wird. Diese Zuführung erfolgt derart, dass die Wellen- oder Kaschierleime kontinuierlich und erst in den jeweiligen Aufbereitungsmodulen so aufbereitet werden, dass die Aufbereitungsmodule den Wellen- oder Kaschierleim an das jeweilige Wellen- oder Kaschierwerk der Wellpappenanlage verbrauchs- und qualitätsabhängig abgeben.

## Beschreibung

Die Erfindung betrifft ein Verfahren zur Herstellung von Wellpappenkleber, welcher beispielsweise Anwendung bei der Herstellung von Wellpappe findet.

Wellpappenkleber, sogenannte Wellen- und Kaschierleime, werden bei der Wellpappenherstellung zur Verklebung von Wellen mit Decken eingesetzt. Als Klebergrundstoff wird vorzugsweise native Stärke verwendet. Um sie einsetzen zu können, kann die Stärke nach verschiedenen Verfahren, wie beispielsweise dem STEIN-HALL-Verfahren (US 2,102,937), dem Minocar- Verfahren oder insbesondere nach dem VCC-Verfahren (DE 198 21 786), aufbereitet werden. Dabei wird zunächst ein Träger, auch Trägerstärke genannt, aufbereitet bzw. hergestellt, der dann mit nativer Stärke, auch Sekundärstärke genannt, sowie mit anderen Stoffen, wie z. B. Sekundärwasser und Borax, zu Wellen-oder Kaschierleim aufbereitet wird.

Bei der Herstellung von Wellpappenkleber nach dem STEIN-HALL-Verfahren wird zunächst eine Stärkesuspension durch Aufschlämmung von Stärke in Wasser aufbereitet. Dann wird die gesamte in der Stärkesuspension enthaltene Stärke durch Zugabe von Alkali, insbesondere Natronlauge, verkleistert und in einem nächsten Schritt durch Zugabe nativer Stärke zu Wellpappenkleber aufbereitet.

Das Minocar-Verfahren entspricht weitestgehend dem STEIN-HALL-Verfahren, nur dass bei diesem Verfahren nicht die gesamte in der Stärkesuspension dispergierte Stärke durch Zugabe von Alkali verkleistert wird, sondern nur ein Teil durch Zugabe einer vorbestimmten Menge an Alkali.

Auch bei dem VCC-Verfahren wird, ähnlich wie bei dem Minocar-Verfahren nur ein Teil der in der Stärkesuspension aufgeschlämmten Stärke verkleistert. Jedoch wird bei dem VCC-Verfahren die Menge an zuzugebender Natronlauge durch die gewünschte Viskosität, die die Trägerstärke aufweisen soll, bestimmt. Dabei wird der Effekt ausgenutzt, dass Stärkekörner in einer wässrigen Stärkesuspension bei Erhöhung der Alkalität aufquellen und aufplatzen, wobei die Stärke klebrig wird und sich kolloidal unter Zunahme der Viskosität im Wasser löst. Somit kann über die Kontrolle der Viskosität die Zugabemenge an Alkali gesteuert und eine gewünschte Viskosität eingestellt werden.

Bei Erreichen der gewünschten Viskosität wird der Trägerstärke Wasser zugegeben, wodurch eine weitere Verkleisterung wegen der Verringerung der Alkalität verhindert wird. Die Fertigstellung des Wellen- oder Kaschierleims nach dem VCC-Verfahren erfolgt unter Zugabe von Stärke, z.B. nativer Stärke, sowie anderen Stoffen, wie z.B. Sekundärwasser und Borax. Das dabei verwendete Sekundärwasser kann beispielsweise Frischwasser, Waschwasser oder auch Farbabwasser sein.

Herkömmlicherweise wird Wellen- oder Kaschierleim in einem oder zwei Ansatzbehältern hergestellt. Die Leime werden dann über Leitungen oder in den Vorratsbehältern zu den Wellen- und Kaschierwerken der Wellpappenanlagen transportiert und in die dafür vorgesehenen Leimwannen gefördert.

Nachteilig am Stand der Technik ist, dass die Wellen- oder Kaschierleime diskontinuierlich in Ansatzbehältern hergestellt werden; dabei geben die Ansatzbehälter Mindestmengen vor, die nicht immer komplett verbraucht werden, und eventuelle Restmengen müssen konditioniert bzw. wieder aufbereitet oder sogar entsorgt werden.

Weiterhin kann der benötigte Wellpappenkleber nicht bedarfsgerecht angefertigt werden, da mit dem angesetzten diskontinuierlich aufbereiteten Leim sowohl Wellen- als auch Kaschierwerke versorgt werden müssen.

Weiterhin ergibt sich ein Problem bei Bedarf an Wellen- oder Kaschierleimen unterschiedlicher Qualität, wie z.B. Viskosität, Klebkraft oder anderer Eigenschaften, da hier nicht flexibel von einer Qualität auf eine andere Qualität umgestellt werden kann, sondern nur im Takt der Leimherstellung in den Ansatzbehältern die Qualität der Wellen- oder Kaschierleime geändert werden kann. Somit können die unterschiedlichen Qualitätsanforderungen der einzelnen Wellen- oder Kaschierwerke nicht erfüllt werden.

Weiterhin ist bei der herkömmlichen Herstellung von Wellen- und Kaschierleimen, d.h. Wellpappenkleber, der Transport der einzelnen Leime zu den Wellen- und Kaschierwerken bzw. zur Wellpappenanlage (WPA) nachteilig, da die Leime in Stich- oder Ringleitungen gefördert werden. Dadurch werden die Leime Scherkräften ausgesetzt, die z.B. die Viskosität und die Klebkraft verringern sowie die Qualität der Leime nachteilig beeinflussen.

Weitere Nachteile, die sich aus dem Transport des dickflüssigen, klebrigen Leims über Leitungen ergeben, sind dem Durchschnittsfachmann bekannt.

Im Allgemeinen lässt sich weiterhin sagen, dass diskontinuierlich ablaufende (Teil-) Vorgänge grundsätzlich den Ablauf moderner Verfahrensprozesse, die im Sinne einer Optimierung stets auf einen kontinuierlichen Prozess hinauslaufen, stören. Die Durchsatzleistung ist bei einem diskontinuierlich oder "batch"-weise ablaufenden Teilprozess begrenzt, weil die einzelnen Teilschritte, wie Eintragung der Stoffe, Mischen, Dispergieren und Entleeren der Ansatz-, Transport- und Vorratsbehälter, nacheinander ablaufen und in der dazu erforderlichen Zeit keine anderen Vorgänge bzw. nur nebengeordnete Vorgänge möglich sind.

Speziell bei Behandlung der in den Ansatzbehältern befindlichen Mengen wird ein großer Teil der eingesetzten Energie in Rührenergie umgesetzt, ohne dabei weiter zur Aufbereitung von Trägerstärke bzw. Wellen- oder Kaschierleim beizutragen. Hier wird die schon fertige Menge des Produkts nur weiter umgewälzt, was sich qualitativ negativ auswirkt, da Scherkräfte zu lange auf die Trägerstärke bzw. den Leim einwirken und so unter anderem seine Klebkraft und Viskosität herabsetzen.

Um zu einer wirtschaftlich erträglichen Durchsatzmenge zu kommen, müssen die Ansatz-, Transport- und Vorratsbehälter verhältnismäßig groß sein. Dies führt insgesamt dazu, dass eventuelle Restmengen ein beträchtliches Volumen einnehmen können, die entsprechend konditioniert bzw. wieder aufbereitet oder entsorgt werden müssen.

Weiterhin müssen entleerte Behälter vor einer weiteren Benutzung oder Lagerung gereinigt werden, was zu hohen Kosten und Investitionen führen kann.

Ferner hat sich gezeigt, dass bei der diskontinuierlich ablaufenden, mittels Ansätzen erfolgenden Herstellung von Wellpappenkleber die Dispergierung der Stärke nicht immer gleichmäßig erfolgt. Das Ergebnis ist ein ungleichmäßiges Produkt.

Der Erfindung liegt daher die Aufgabe zugrunde, ein Verfahren, eine Vorrichtung und eine Anlage, in denen das Verfahren zur Anwendung kommt, zu schaffen, wobei die Herstellung von Wellpappenkleber kontinuierlich erfolgt und die Nachteile des Standes der Technik vermieden werden.

Hinsichtlich des Verfahrens gelingt die Lösung dieser Aufgabe mit den Merkmalen gemäß Anspruch 1. Das erfindungsgemäße Verfahren zum Herstellen von Wellen- und Kaschierleim besteht somit darin, dass in einem kontinuierlich ablaufenden Prozess die Eingangsstoffe für die Herstellung von Wellpappenkleber kontinuierlich zugeführt werden, wobei die Ausgangsstoffe, d.h. die Wellen- oder Kaschierleime ebenfalls kontinuierlich entnommen werden.

Das erfindungsgemäße Verfahren arbeitet insbesondere nach dem VCC-Verfahren, welches in der DE 198 21 786 beschrieben ist. Jedoch erfolgen bei dem Verfahren gemäß der Erfindung die einzelnen Teilprozesse kontinuierlich, was im Folgenden näher erläutert werden soll.

Für die kontinuierliche Aufbereitung von Wellen- oder Kaschierleim aus Stärkesuspension werden Aufbereitungsmodule gemäß Anspruch 10 bereitgestellt.

In einer Anlage gemäß Anspruch 12, welche Aufbereitungsmodule gemäß Ansprüchen 10 oder 11 aufweist, ist Wellpappenkleber gemäß dem Gesamtverfahren nach Anspruch 1 herstellbar.

Die jeweiligen Unteransprüche 2 bis 9, 11 und 13 sind auf vorteilhafte Aus- und Weiterbildung des erfindungsgemäßen Verfahrens, des erfindungsgemäßen Aufbereitungsmoduls und der erfindungsgemäßen Anlage gerichtet.

Die durch das erfindungsgemäße Verfahren hergestellten Wellen- und Kaschierleime, d.h. Wellpappenkleber, werden somit nicht mehr wie im Stand der Technik in der "Leimküche" hergestellt, sondern werden erst direkt, unmittelbar neben einem Wellen- oder Kaschierwerk einer Wellpappenanlage (WPA) aufbereitet.

Hierzu wird die in einer Stärkesuspensionsstation hergestellte Stärkesuspension (Slurry), beispielweise über eine Leitung, direkt an mindestens ein Aufbereitungsmodul eines Wellen- oder Kaschierwerks einer WPA geleitet und dort kontinuierlich verbrauchs- und qualitätsabhängig bzw. bedarfs- und eigenschaftsgerecht zu Wellen- oder Kaschierleim weiterverarbeitet, der dem Wellen- oder Kaschierwerk kontinuierlich zugeführt wird.

Die Zuführung der Leime an das Wellen- oder Kaschierwerk erfolgt dabei ebenso kontinuierlich wie deren Herstellung. Auch eine Zwischenschaltung von vorzugsweise kleineren Behältern zwischen die Aufbereitungsmodule und die Wellen- oder Kaschierwerke zum kurzzeitigen Mengenausgleich von Massenströmen beeinflusst die kontinuierliche Herstellung des Wellpappenklebers nicht. Eine solche quasi kontinuierliche (mengengepufferte) Leimzuführung kann z.B. bei einem Geschwindigkeitswechsel während der Wellpappenproduktion erforderlich sein. Im Allgemeinen wird jedoch der Leim mengenmäßig so hergestellt, dass die erzeugten Mengen direkt von den Leimwerken abgenommen werden und keine nennenswerten Mengen in irgendwelchen Behältern verbleiben.

Durch das erfindungsgemäße Verfahren wird gewährleistet, dass dem Leimwerk nur frisch aufbereiteter Leim zugeführt wird. Dies hat insbesondere den Vorteil, dass der Leim genau auf die Bedürfnisse jedes einzelnen Leimwerks einer WPA angepasst werden kann und optimale Eigenschaften für den jeweiligen Herstellungsschritt der Wellpappe aufweist. Daraus ergibt sich ein geringerer Verbrauch an Wellen- oder Kaschierleim aufgrund seiner den Bedürfnissen der Wellpappenherstellung optimal und individuell angepassten Parameter für jeden einzelnen Verklebeschritt.

Für die Herstellung des Slurry (Stärkesuspension) wird beispielweise in einer Stärkesuspensionsstation Stärke, z.B. native Stärke aus Kartoffeln, mit Wasser in einem Rührwerk aufgeschlämmt. Das heißt, die Stärke wird so in das Wasser eingebracht, dass sie sich nicht löst, sondern als Suspension darin vorliegt. Da Stärke bei Temperaturen ab ca. 45° beginnt aufzuquellen und aufzuplatzen, darf das eingesetzte Wasser zwar vorgewärmt sein, aber Temperaturen, die eine Verkleisterung der Stärke bewirken, nicht überschreiten. Der Vorteil einer Stärkesuspension liegt darin, dass diese, im Gegensatz zu verkleisterter Stärke oder Leim, nahezu keine Viskosität aufweist und somit einfach, beispielweise über Rohrleitungen, zu den Aufbereitungsmodulen der Leimwerke gefördert werden kann. Auch auftretende Scherungen beeinflussen die Qualität der Stärkesuspension nicht.

Das für eine Aufschlämmung der Stärke verwendete Wasser kann Frischwasser oder Sekundärwasser, wie z.B. Wasch- oder Farbabwasser sein. Dabei wird dem kontinuierlich einem Rührwerk zugeführten Frisch- oder Sekundärwasser Stärke, vorzugsweise kontinuierlich aus einem Silo, zugeführt und in dem Rührwerk kontinuierlich zu Slurry (Stärkesuspension) aufbereitet bzw. aufgeschlämmt und den Aufbereitungsmodulen der Leimwerke kontinuierlich zugeführt.

Vorzugsweise wird Slurry kontinuierlich für alle Aufbereitungsmodule der Leimwerke einer WPA gleichzeitig hergestellt, wobei es prozesstechnisch erforderlich sein kann, dass zwischen der kontinuierlichen Slurryherstellung und den Leitungen, die die Aufbereitungsmodule mit der Slurryherstellung verbinden, ein Zwischenbehälter vorgesehen ist, um Unterschiede zwischen der hergestellten Menge an Slurry und der abgenommen Menge auszugleichen bzw. den Massefluss an Slurry innerhalb der Leitungen konstant zu halten. Der Füllstand dieses Zwischenbehälters kann dabei über die Produktionsmenge pro Zeiteinheit gesteuert werden. Damit bleibt die Slurryherstellung zu jedem Zeitpunkt kontinuierlich, nur dass die umgesetzten Massenströme in der Slurryherstellung nicht konstant gehalten werden.

Bei geeigneter Auslegung der Stärkesuspensionsstation zur Slurryherstellung können auch mehrere WPAs mit den darin enthaltenen Aufbereitungsmodulen für Wellen- oder Kaschierleime von einer einzigen Stärkesuspensionsstation mit Slurry versorgt werden.

In der Stärkesuspensionsstation kann das Slurry in verschiedenen Konzentrationen aufbereitet werden, wobei jede charakteristische Konzentration als feste Größe vorgegeben ist. Die jeweiligen festen Größen sind in einer Rezepturverwaltung hinterlegt.

Auch wenn es für den Gesamtprozess vorteilhaft ist, die Stärkesuspension kontinuierlich herzustellen, so kann dies auch diskontinuierlich geschehen, solange eine kontinuierliche Versorgung der Aufbereitungsmodule mit Slurry aufrechterhalten wird.

Das von ihrer Aufbereitungsstation für Stärkesuspension an die Aufbereitungsmodule geleitete Slurry wird in den Aufbereitungsmodulen weiter zu Wellen- oder Kaschierleim aufbereitet.

In einer Wellpappenanlage (WPA) sind mindestens ein Wellenwerk oder ein Kaschierwerk vorgesehen, wobei im Regelfall mehrere dieser Leimwerke in einer WPA angeordnet sind, um einlagige oder mehrlagige Wellpappen herzustellen. Dabei ist je Leimwerk, d.h. je Wellen- oder Kaschierwerk ein Aufbereitungsmodul vorgesehen, in dem Slurry zu Wellen-oder Kaschierleim aufbereitet wird.

Vorteilhafterweise sind die Aufbereitungsmodule unmittelbar neben der Wellpappenanlage so nah wie möglich an den Auftragswerken der Leimwerke zum Auftragen des Leims auf die Welle oder die Kaschierung angeordnet.

Bei der Weiterverarbeitung von Stärkesuspension zu Wellpappenkleber wird die einem Aufbereitungsmodul zugeführte Stärkesuspension (in Wasser dispergierte Stärke) zunächst in einer ersten Station zumindest teilweise verkleistert. Dabei wird unter Verkleisterung das Aufquellen und Aufplatzen der Stärkekörner verstanden, wobei sich die Oberfläche der Stärkekörner stark vergrößert und die adhäsiven Eigenschaften der in der Stärke enthaltenen Polysaccharide zum Tragen kommen. Dabei löst sich die Stärke kolloidal in Wasser. Die dabei entstehende viskose Flüssigkeit wird Träger- oder Primärstärke genannt. Die Verkleisterung von Stärke kann beispielsweise durch Erhöhen der Alkalität oder durch Temperaturerhöhung herbeigeführt werden.

Bei dem erfindungsgemäßen Verfahren erfolgt die Verkleisterung der Stärkesuspension, bzw. die Herstellung der Trägerstärke, kontinuierlich in einem ersten Mischer eines Aufbereitungsmoduls durch kontinuierliche Zugabe von Alkali, insbesondere Natronlauge, zu der ebenfalls kontinuierlich in den Mischer eingetragenen Stärkesuspension. Der Stärkesuspension wird jedoch nur soviel Alkali zugegeben, dass bei dem teilweisen Verkleistern der Stärkemenge in der zugegebenen Stärkesuspension in dem Mischer eine gewünschte Sollviskosität erzeugt wird. Gleichzeitig mit der Zugabe von Alkali kann dem Mischer kontinuierlich Wasser, welches ebenfalls Sekundärwasser sein kann, zugegeben werden, damit eine vorgegebene Viskosität der Trägerstärke und eine vorgegebene Konzentration an nicht verkleisterter Stärke erreicht wird. Während der kontinuierlichen Zugabe und Mischung von Stärkesuspension, Alkali und Wasser in der ersten Station wird dem Mischer, beispielsweise mittels einer Pumpe, kontinuierlich Trägerstärke bzw. Primärstärke entnommen und zumindest ein erster Teilstrom einer zweiten Station des Aufbereitungsmoduls zugeführt. Ein zweiter Teilstrom der Trägerstärke kann zu dem ersten Mischer wieder zurückgeführt werden.

Damit die Trägerstärke Klebkraft, zum Beispiel durch Einwirken von Wärme, entfalten kann, muss der Trägerstärke unverkleisterte Stärke zugegeben werden. Diese unverkleisterte Stärke wird nach Auftragen des Wellen- oder Kaschierleims auf die Welle bzw. Decke durch Erwärmen verkleistert, d.h. die unverkleisterte Stärke quillt und platzt auf, wobei die adhäsiven Eigenschaften freiwerden. Im Zusammenspiel mit den weiteren Inhaltsstoffen des Wellen- oder Kaschierleims wird so die erwünschte Klebkraft erzeugt.

Die Zugabe von unverkleisterter Stärke erfolgt in dem erfindungsgemäßen Verfahren in einer zweiten Station des Aufbereitungsmoduls in einem zweiten Mischer. Dabei werden dem zweiten Mischer Trägerstärke aus dem ersten Mischer, unverkleisterte Stärke, insbesondere in Form von Stärkesuspension, Wasser, insbesondere Sekundärwasser, und weitere eigenschaftsbeeinflussende Stoffe, wie z.B. Borax, kontinuierlich zugeführt. Damit sind die Eingangsstoffe für die Herstellung von Wellen- oder Kaschierleim eingebracht.

Durch kontinuierliches Mischen und Scheren der kontinuierlich eingebrachten Stoffe werden die Leime nun fertiggestellt und die gewünschte Viskosität, Klebkraft und weitere Eigenschaften der Wellen- oder Kaschierleime eingestellt. Dabei kann das kontinuierliche Scheren auch durch einen dem zweiten Mischer nachgeschalteten Scherblock erfolgen. Der Scherblock dient dabei hauptsächlich zum Verringern der Viskosität und zum Stabilisieren der Klebereigenschaften. Gleichzeitig mit der Mischung und Scherung in der zweiten Station wird der zweiten Station, beispielsweise durch eine Pumpe, kontinuierlich Leim, d.h. Wellen- oder Kaschierleim, entnommen und den Wellen- oder Kaschierwerken zugeführt.

Das dem zweiten Mischer hinzugegebene Sekundärwasser kann dabei wiederum Frischwasser, Waschwasser oder Farbabwasser sein. Bei der Zugabe von unverkleisterter Stärke zu der zweiten Station eines Aufbereitungsmoduls spricht man auch von Zugabe von Sekundärstärke, welche beispielsweise auch native Stärke sein kann.

Wie oben ausgeführt kann die Menge an aufbereitetem bzw. hergestelltem Wellen- oder Kaschierleim dem Bedarf der WPA mengen-, qualitäts- und eigenschaftsgemäß angepasst werden. Dies geschieht beispielsweise auch dadurch, dass Teilströme an Medien, die die einzelnen Stationen der Aufbereitungsmodule verlassen, jeweils wieder der zugehörigen Station rückgeführt werden können. Damit können beispielsweise durch Minderverbrauch der nachgeschalteten Stellen die zuviel erzeugten Mengen an Trägerstärke oder Leim bei gleichzeitiger Reduzierung der dieser Station zuzuführenden Mengen ausgeglichen werden oder Viskositäten, Klebkraft und/oder andere Qualitäten der Leime korrigiert oder neu eingestellt werden.

Minderverbrauch oder sehr schnell ansteigender Mehrverbrauch an Leim kann aber auch durch Anordnen von Zwischenbehältern zwischen den Aufbereitungsmodulen und den Auftragswerken der Leimwerke ausgeglichen werden, ohne dass von dem Prinzip der kontinuierlichen Leimherstellung abgewichen wird. Durch den Einsatz solcher Zwischenbehälter, die vorzugsweise nicht größer sind als die im Stand der Technik verwendeten Ansatzbehälter, wird eine kontinuierliche Zuführung von Leim an die Leimwerke gewährleistet.

Dabei kann jedem Aufbereitungsmodul ein oder können diesem mehrere Zwischenbehälter zugeordnet werden oder aber auch nur ein Behälter je Leimwerk vorgesehen werden. Ist jedem Leimwerk ein Zwischenbehälter zugeordnet, so können beispielsweise mehrere Wellen- oder Kaschierwerke von einem Aufbereitungsmodul mit Wellen- oder Kaschierleim versorgt werden, wobei die Herstellung der entsprechenden Leime weiterhin kontinuierlich erfolgt.

Vorzugsweise stehen solche Zwischenbehälter, auch Satellitenbehälter genannt, auf Waagen, damit Leimverbräuche erfasst und bilanziert werden können.

Das erfindungsgemäße Verfahren ist jedoch nicht auf eine WPA beschränkt, sondern kann auch bei mehreren benachbarten WPAs eingesetzt werden, wobei speziell die Aufschlämmung von Stärke zu Stärkesuspension zentral für alle WPAs und somit für alle in allen WPAs im Einsatz befindlichen Aufbereitungsmodule zentral erfolgen und somit allen Aufbereitungsmodulen kontinuierlich dispergierte Stärke zugeführt werden kann. Dabei kann durch Einsatz von Slurry-Zwischenbehältern, z.B. je WPA ein Behälter, die Konzentration der aufgeschlämmten Stärke den einzelnen WPAs angepasst werden.

Das erfindungsgemäße Verfahren zeigt, wie mit einem kontinuierlichen Herstellverfahren für Wellpappenkleber kostengünstig, energiesparend, verbrauchs- und bedarfsangepasst verschiedene Wellen- oder Kaschierleime für ein oder mehrere Wellen- oder Kaschierwerke einer oder mehrerer WPAs hergestellt werden können.

Durch den bedarfsgerechten kontinuierlichen Leimherstellungsprozess wird nur "frischer" Leim bei der Verklebung von z.B. Welle mit Deckel verwendet, da der Leim nicht wie herkömmlich aus Ansatz- oder Vorratsbehältern oder über lange Leitungen den Leimwerken zugeführt wird. Der in seinen Eigenschaften in den Aufbereitungsmodulen optimal für seine Anwendung eingestellte Leim unterliegt nur den Scherkräften, die für die Einstellung z.B. der Viskosität und der Klebkraft notwendig sind. Daher hat der Leim zum Zeitpunkt, an dem er an die Auftragswerke gefördert wird, maximale Klebkraft, wodurch die Menge an Leim, die zur Verklebung von beispielsweise Deckel mit Welle benötigt wird, gegenüber der herkömmlichen "batch"-weisen Leimherstellung verringert werden kann. Daher wird nur ein Minimum an Leim verbraucht, und Engpässe bei der Wellpappenherstellung, die auf mangelnde Leimherstellung zurückzuführen sind, werden vermieden.

Aber nicht nur der Leimverbrauch wird minimiert, sondern auch der damit verbundene Energieverbrauch, was insbesondere die Wirtschaftlichkeit verbessert.

Ein weiterer Vorteil der unmittelbar direkt neben den Wellen- und Kaschierwerken angeordneten Aufbereitungsmodulen liegt ferner darin, dass der herzustellende Wellen- oder Kaschierleim direkt an die Anforderungen des Verklebeschritts für die herzustellende Wellpappe angepasst werden kann, da die Produktqualität, d.h. der für die momentan herzustellende Wellpappe oder Wellpappenschicht geeignete Leim, individuell und initial in der Aufbereitungsanlage sozusagen per Knopfdruck eingestellt werden kann. Dazu werden einfach nur die Rezepturdaten in dem Aufbereitungsmodul verändert. Die Rezepturdaten sind vorzugsweise in einer Datenbank hinterlegt.

Mit der direkten Aufbereitung der Leime an den entsprechenden Werken wird weiterhin erreicht, dass bei einem Produktwechsel innerhalb der WPA, welcher einen Wechsel auf einen anderen Leim erforderlich macht, nicht mit Behältern und / oder Restmengen hantiert werden muss.

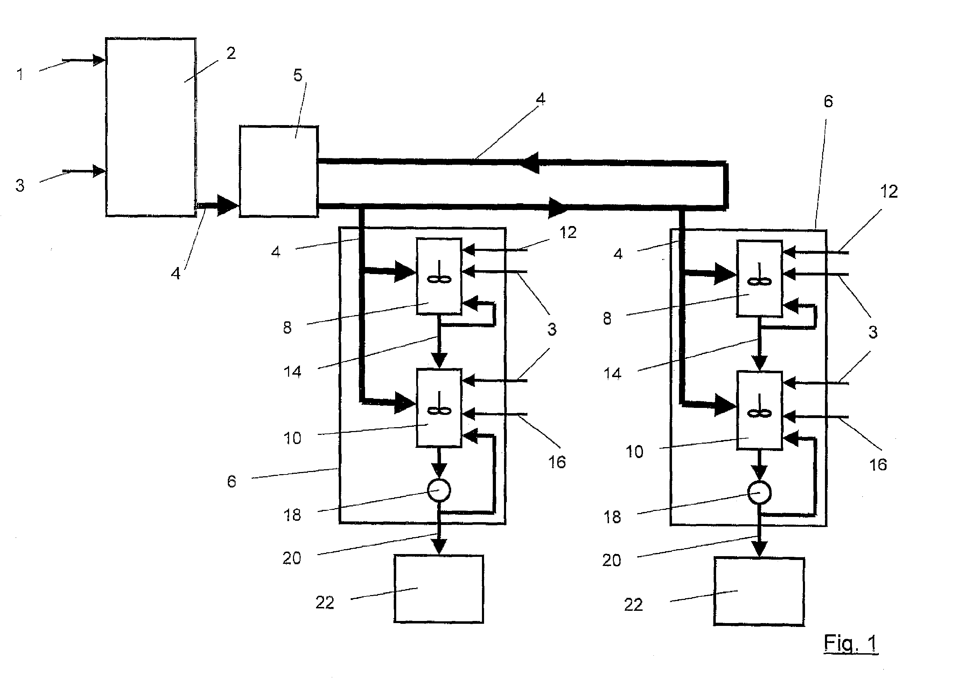

Die Erfindung wird anschließend anhand der einzigen Figur, welche das erfindungsgemäße Verfahren stark vereinfacht zeigt, näher erläutert.

In der Figur ist mit der Bezugsziffer 2 eine Stärkesuspensionsstation bezeichnet, welcher über die Stärkezufuhrleitung 1 Stärke und über die Wasserzufuhrleitung 3 Wasser zugeführt wird. Über eine Stärkesuspensionsleitung 4 wird in der schematisch dargestellten Anlage der Figur die Stärkesuspension an Aufbereitungsmodule 6 gefördert. Die Stärkesuspensionsleitung 4 ist in diesem Ausführungsbeispiel als Ringleitung ausgebildet, wobei auch Stichleitungen zu den einzelnen Aufbereitungsmodulen 6 möglich sind.

In den Aufbereitungsmodulen 6 sind zwei Mischer 8 und 10 vorgesehen. Dabei werden dem ersten Mischer 8 kontinuierlich Stärkesuspension aus der Stärkesuspensionsleitung 4, Wasser aus der Wasserzufuhrleitung 3 und Alkali, insbesondere Natronlauge, aus der Alkalizufuhrleitung 12 zugeführt und zu Trägerstärke aufbereitet. Die aufbereitete Trägerstärke wird dem Mischer 8, beispielsweise mittels einer Pumpe (nicht dargestellt), kontinuierlich entnommen, wobei eine Trägerstärkeleitung 14 derart ausgebildet ist, dass ein Teilstrom der Trägerstärke wieder dem ersten Mischer 8 zugeführt werden kann.

In einem zweiten Mischer 10 wird aus der über die Trägerstärkeleitung 14 dem zweiten Mischer 10 zugeführten Trägerstärke zusammen mit der aus der Stärkesuspensionsleitung 2 zugeführten Stärke, dem aus der Wasserzufuhrleitung 3 zugeführten Wasser und dem mit der Boraxzufuhrleitung 16 zugeführten Borax kontinuierlich Wellen- oder Kaschierleim aufbereitet. Die Viskosität des Leimes wird durch den dem zweiten Mischer 10 nachgeschalteten Scherblock 18 kontinuierlich eingestellt. Über die Wellenleim- oder Kaschierleimleitung 20 wird dem zweiten Mischer 10 kontinuierlich Wellpappenkleber, d.h. Wellen- oder Kaschierleim, entnommen und einem Wellen- oder Kaschierwerk 22 einer WPA zugeführt.

Genauso wie die Trägerstärkeleitung 14 ist auch in der Wellenleim- oder Kaschierleimleitung 20 eine Rückführung eines Teilstromes des Wellpappenklebers an den zweiten Mischer 10 vorgesehen. Durch diese Rücklaufleitung ist es beispielweise möglich, die gewünschte Endviskosität einzustellen.

### Bezugszeichenliste

- 1: Stärkezufuhrleitung
- 2: Stärkesuspensionsstation
- 3: Wasserzufuhrleitung
- 4: Stärkesuspensionsleitung
- 5: Zwischenspeicher
- 6: Aufbereitungsmodul
- 8: erster Mischer
- 10: zweiter Mischer
- 12: Alkalizufuhrleitung
- 14: Trägerstärkeleitung
- 16: Boraxzufuhrleitung
- 18: Scherblock
- 20: Wellenleim- oder Kaschierleimleitung
- 22: Wellen- oder Kaschierwerk

## Patentansprüche

1. Verfahren zur Herstellung von Wellen- oder Kaschierleimen, insbesondere nach dem VCC-Verfahren, wobei Aufbereitungsmodulen (6) für Wellen- oder Kaschierleim, die unmittelbar neben Wellen- oder Kaschierwerken (22) einer Wellpappenanlage angeordnet sind, kontinuierlich Stärkesuspension derart zugeführt wird, dass die Wellen-oder Kaschierleime kontinuierlich und erst in dem jeweiligen Aufbereitungsmodul (6) so aufbereitet werden, dass die Aufbereitungsmodule (6) den Wellen- oder Kaschierleim an das jeweilige Wellen- oder Kaschierwerk der Wellpappenanlage verbrauchs-und qualitätsabhängig abgeben.

2. Verfahren nach Anspruch 1, wobei die Aufbereitung der Stärkesuspension in einer Stärkesuspensionsstation (2) gemeinsam für mehrere Wellen- und Kaschierwerke (22) erfolgt und diesen kontinuierlich zugeführt wird.

3. Verfahren nach Anspruch 2, wobei die kontinuierliche Zuführung der Stärkesuspension an die Wellen- und Kaschierwerke (22) aus einem Zwischenbehälter (5) erfolgt.

4. Verfahren nach Anspruch 3, wobei in einer ersten Station (8) des Aufbereitungsmoduls (6) durch kontinuierliche Zugabe von Stärkesuspension, Wasser, insbesondere Sekundärwasser, und Alkali kontinuierlich eine Trägerstärke aufbereitet wird, welche kontinuierlich der ersten Station (8) des Aufbereitungsmoduls (6) entnommen wird.

5. Verfahren nach Anspruch 4, wobei die Zugabemengen an Stärkesuspension, Alkali und Wasser durch fortlaufende Kontrolle einer vorgegebenen Viskosität der Trägerstärke geregelt werden.

6. Verfahren nach Anspruch 4 oder 5, wobei ein erster Teilstrom der der ersten Station (8) kontinierlich entnommenen Trägerstärke einer zweiten Station (10) des Aufbereitungsmoduls (6) zugeführt und ein zweiter Teilstrom wieder der ersten Station (8) zugeführt wird.

7. Verfahren nach Anspruch 6, wobei in der zweiten Station (10) der Trägerstärke weiterhin Stärke, insbesondere in Form von Stärkesuspension, Wasser, insbesondere in Form von Sekundärwasser, und Borax zugeführt wird, die eingetragenen Stoffe miteinander vermischt werden und in einem Scherblock (18) die von dem Wellen- oder Kaschierwerk benötigte Viskosität eingestellt wird.

8. Verfahren nach einem der Ansprüche 1 bis 7, wobei in einem der Aufbereitungsmodule (6) alternativ Wellen- oder Kaschierleime mit unterschiedlichen Eigenschaften in unterschiedlichen Mengen aufbereitet werden können.

9. Verfahren nach einem der Ansprüche 1 bis 8, wobei simultan in verschiedenen Aufbereitungsmodulen (6) verschiedene Leime der herstellbaren Wellen- und Kaschierleime mit unterschiedlichen Eigenschaften in unterschiedlichen Mengen aufbereitet werden können.

10. Aufbereitungsmodul (6) für das Herstellungsverfahren für Wellen- oder Kaschierleim nach einem der Ansprüche 1 bis 8, wobei ein Aufbereitungsmodul (6) einen ersten Mischer (8) zum Herstellen einer Trägerstärke und einen zweiten Mischer (10) zum Aufbereiten des Wellen- oder Kaschierleims aufweist, dessen erforderliche Viskosität in einem Scherblock (18) eingestellt wird.

11. Aufbereitungsmodul (6) für das Herstellungsverfahren für Wellen- oder Kaschierleim nach Anspruch 10, wobei in dem Aufbereitungsmodul (6) alternativ Wellen- oder Kaschierleim aus der bereitgestellten Stärkesuspension herstellbar ist.

12. Anlage für das Herstellungsverfahren für Wellen- oder Kaschierleim nach einem der Ansprüche 1 bis 9, mit Aufbereitungsmodulen nach einem der Ansprüche 10 oder 11, wobei die Aufbereitung der Stärkesuspension für ein oder mehrere Aufbereitungsmodule (6) in einer Stärkesuspensionsstation (2) erfolgt, und die Aufbereitungsmodule (6) mit Ring- oder Stichleitungen (4) mit der Stärkesuspensionsstation (2) verbunden sind und unmittelbar neben den Wellen- oder Kaschierwerken (22) von Wellpappenanlagen angeordnet sind.

13. Anlage nach Anspruch 12, wobei simultan in verschiedenen Aufbereitungsmodulen (6) verschiedene Leime der herstellbaren Wellen- und Kaschierleime in unterschiedlicher Qualität und Menge aufbereitbar sind.
